# DEMANDE DE BREVET EUROPEEN

(11) **EP 3 404 122 A1**
(43) Date de publication de la demande: **21.11.2018**
(21) Numéro de dépôt: 18172924.5
(22) Date de dépôt: 17.05.2018
(51) Int. Cl.: C22C 1/05, B22F 1/00, C22C 1/04, C22C 14/00, C22C 29/10, B22F 5/00, C22C 32/00

(54) **PROCEDE D'ELABORATION PAR SLA D'UN MATERIAU COMPOSITE A MATRICE METALLIQUE**

(30) Priorité: 18.05.2017 FR 1754418
(71) Demandeur: Commissariat à l'énergie atomique et aux énergies alternatives, 75015 Paris (FR)
(72) Inventeur: VINCENT, Denis, 38360 NOYAREY (FR); LAUCOURNET, Richard, 38500 LA BUISSE (FR); ROUMANIE, Maryline, 38500 COUBLEVIE (FR)
(74) Mandataire: Brevalex

(57) **Abrégé**

Procédé d'élaboration d'un matériau composite à matrice métallique comprenant au moins les étapes successives suivantes :
a) Fourniture d'une pièce formée d'une poudre métallique dispersée dans un matériau polymère, le matériau polymère comprenant au moins un polymère comprenant une double liaison carbone-carbone et/ou un cycle aromatique,
b) Réalisation d'un premier traitement thermique à une première température T_{d} sur la pièce de manière à dégrader le matériau polymère pour former des résidus carbonés,
c) Réalisation d'un second traitement thermique à une deuxième température T_{f}, supérieure à la première température T_{d}, pour fritter la poudre métallique et, simultanément, diffuser le carbone, provenant des résidus carbonés, dans la poudre métallique de manière à former des précipités de carbure de métal dispersés dans une matrice métallique.

## Description

### DOMAINE TECHNIQUE ET ÉTAT DE LA TECHNIQUE ANTÉRIEURE

L'invention concerne les composites à matrice métallique, et plus particulièrement, leur procédé d'élaboration, notamment par stéréolithographie (SLA).

Les composites à matrice métalliques (MMCs) sont une classe de matériau combinant la résistance et la rigidité élevée des céramiques avec la résilience et la tenue au choc des métaux. Ils sont également résistants à l'usure, à l'oxydation et à des températures élevées.

Au sein des MMCs, les composites à matrice métalliques de titane (TMMCS) font l'objet de nombreuses recherches, car en plus des avantages précédemment cités, ils présentent une faible densité pouvant ainsi permettre de créer des structures résistantes, rigides, légères, et présentant une bonne tenue au choc. Ces composites sont formés d'une matrice de titane renforcée généralement par des précipités de TiC et/ou de TiB.

Il existe différentes voies pour élaborer les TMMCs : par fusion à arc, solidification rapide ou atomisation, ou encore par mélange de poudre. C'est cette dernière voie qui est actuellement la plus porteuse.

Comme décrit dans le document US 2011/0293461, elle consiste, classiquement, à mélanger une poudre de titane avec le renfort céramique (TiB et/ou TiC), mettre en forme la pièce et fritter la pièce pour la densifier. Ce procédé nécessite peu d'étapes de mise en oeuvre, mais il est limité par la taille et le coût des renforts disponibles sur le marché.

Comme décrit dans l'article de Li et al. (« Powder metallurgy Ti-TiC metal matrix composites prepared by in situ reactive processing of Ti-VGCFs system », Carbon 61 (2013) 216-228), il est également possible de mélanger le titane avec des nanotubes de carbone, pour former in situ, le composé céramique.

Dans ces deux procédés, la pièce peut être mise en forme, par exemple, par pressage isostatique à chaud (HIP pour « Hot isostatic Pressing »), frittage flash (SPS pour « Spark Plasma Sintering »), ou par extrusion à chaud.

Ces procédés sont relativement complexes et coûteux, et les moyens de mise en forme des pièces sont limités. De plus, l'interface précipité/matrice peut présenter des défauts, ce qui diminue les propriétés mécaniques du matériau composite.

### EXPOSÉ DE L'INVENTION

C'est, par conséquent, un but de la présente invention de proposer un procédé d'élaboration de matériau composite à matrice métallique plus simple à mettre en oeuvre et moins coûteux.

C'est également un but de la présente invention de proposer un procédé d'élaboration permettant d'obtenir des matériaux composites à matrices métalliques présentant une structure métallographique homogène avec peu de défauts.

Ces buts sont atteints par un procédé d'élaboration d'un matériau composite à matrice métallique comprenant au moins les étapes successives suivantes :
a) Fourniture d'une pièce formée d'une poudre métallique dispersée dans un matériau polymère, le matériau polymère comprenant au moins un polymère comprenant une double liaison carbone-carbone et/ou un cycle aromatique,
b) Réalisation d'un premier traitement thermique à une première température T_{d} sur la pièce de manière à dégrader le matériau polymère pour former des résidus carbonés,
c) Réalisation d'un second traitement thermique à une deuxième température T_{f}, supérieure à la première température T_{d}, pour fritter la poudre métallique et, simultanément, diffuser le carbone, provenant des résidus carbonés, dans la poudre métallique de manière à former des précipités de carbure de métal dispersés dans une matrice métallique.

Par « matériau polymère », on entend un matériau formé d'un polymère ou d'un copolymère.

Par « double liaison », on entend une double liaison carbone-carbone C=C.

Par cycle aromatique, on entend un cycle comprenant un système π conjugué, formé de liaisons doubles carbone-carbone.

Dans le procédé proposé, il n'y a plus besoin de renfort céramique ou de fibres de carbone, comme dans les procédés de l'état de la technique, on utilise le carbone présent dans les matériaux polymères, ce qui réduit considérablement les coûts. Il a été observé que l'utilisation de polymère ayant une double liaison carbone-carbone et/ou d'un cycle aromatique assure la présence de résidus carbonés au moment de l'étape de frittage, contrairement aux polymères comprenant des liaisons simples carbone-carbone pour lesquels il n'y a plus de résidus carbonés au moment de l'étape de frittage.

Avantageusement, les particules formant la poudre métallique ont un diamètre inférieur à 50µm, encore plus préférentiellement inférieur à 45µm, et encore plus préférentiellement inférieur à 30µm. Les poudres de titane étant peu réactives, des diamètres de faibles dimensions favoriseront la mise en oeuvre du procédé d'élaboration des pièces. Pour les poudres les plus réactives, des diamètres de particules allant jusqu'à 75µm peuvent être utilisés.

Avantageusement, la température de déliantage T_{d} est comprise dans la gamme allant de 300°C à 600°C, et plus avantageusement de 400°C à 550°C et la température de frittage T_{f} est comprise dans la gamme allant de 1000°C à 1400°C, et plus avantageusement de 1200°C à 1300°C.

Avantageusement, une rampe en température inférieure ou égale à 3°C/min, et de préférence de l'ordre de 1°C/min, est réalisée de la température T₁= T_{d}-50°C à la température T_{d}. Les chocs thermiques sont évités et les contraintes internes au sein du matériau limitées. Avec de telles rampes en températures, la pièce ne présente pas de fissures.

Avantageusement, un ou plusieurs paliers en température sont réalisés entre la température Tₚ et T_{d}, avec Tₚ=T_{d}-150°C pendant une durée d'au moins 30 minutes, et de préférence, d'au moins une heure, et encore plus préférentiellement pendant une durée d'au moins deux heures. Il a été observé que la réalisation des différents paliers conduit à une meilleure dégradation du polymère, et à une meilleure répartition des résidus carbonés.

Avantageusement, un palier en température est réalisé à la température T_{f} pendant une durée d'au moins 30 minutes, et de préférence, d'au moins une heure, et encore plus préférentiellement pendant une durée d'au moins deux heures. La pièce obtenue est dense et présente une bonne cohésion.

Avantageusement, les précipités de carbure de métal sont uniformément dispersés dans la matrice métallique.

Avantageusement, la matrice métallique est en titane ou en alliage de titane.

Avantageusement, la pièce en matériau composite, fournie à l'étape a), est formée à température ambiante.

Avantageusement, la pièce de l'étape a) est obtenue par polymérisation d'une pâte comprenant la poudre métallique et un précurseur du polymère. L'élaboration des MMCs ne passe plus par une étape de mélange de différentes poudres, comme dans l'art antérieur. La pâte est réalisé entre un précurseur du polymère, qui est visqueux, ou liquide, et une poudre métallique, ce qui assure une parfaite homogénéité du mélange. Le procédé de réalisation des MMCs est simplifié. Le matériau composite obtenu est plus homogène. Les précipités sont mieux répartis dans la matrice métallique. Les interfaces renfort/matrice sont plus intimes avec des précipités de petites tailles. Les étapes de manipulation des poudres sont réduites et les risques écologiques et de santé liés à leur manipulation limités.

Avantageusement, la poudre métallique représente au plus 65% volumique de la pâte, et de préférence de 30% à 60% volumique de la pâte, et encore plus préférentiellement de 35% à 58% volumique. La proportion de poudre métallique par rapport au polymère sera ajustée en fonction des propriétés mécaniques du matériau composite recherchées.

Avantageusement, le polymère est photopolymérisable et en ce que la pâte comprend un photoinitiateur de polymérisation.

Avantageusement, le polymère est de type acrylate, époxyde ou un de leurs mélanges.

Avantageusement, avant l'étape a), la pièce est mise en forme par stéréolithographie selon une étape a1) dans laquelle :
- une couche de pâte, contenant la poudre métallique, le précurseur du polymère et le photoinitiateur, est formée et,
- le précurseur du polymère est photopolymérisé,
l'étape a1) pouvant être répétée plusieurs fois.

La pièce obtenue, à l'issue de la mise en forme par stéréolithographie, est solide, elle comprend le polymère dans lequel est dispersée la poudre métallique. Le procédé d'élaboration des MMCs est simplifié car il peut être associé à un procédé de mise en forme de type stéréolithographie, permettant d'élaborer des pièces de formes variées et complexes.

Le carbone, contenu dans les liants organiques des encres utilisées en stéréolithographie, permet de former in situ, lors du traitement de déliantage/frittage, des composés de type carbure qui vont venir durcir et rigidifier la matrice métallique.

Avantageusement, le matériau polymère comprend différents polymères, chacun muni d'une double liaison carbone-carbone et/ou d'un cycle aromatique.

### BRÈVE DESCRIPTION DES DESSINS

La présente invention sera mieux comprise sur la base de la description qui va suivre et des dessins en annexe sur lesquels:
- la figure 1 est une photo d'une pièce en matériau composite à matrice de titane obtenu selon un premier mode de réalisation de l'invention,
- la figure 2 est une analyse thermogravimétrique, réalisée sous atmosphère inerte, d'un mélange de polymère,
- la figure 3A est une photo d'une pièce en matériau composite à matrice de titane, avant une étape de frittage, obtenu selon un deuxième mode de réalisation de l'invention,
- la figure 3B est une photo de la pièce de la figure 3A, après l'étape de frittage,
- les figures 4A et 4B sont des clichés d'une coupe métallographique de la pièce de la figure 3B, obtenus par microscopie électronique à balayage, à différentes échelles,
- la figure 5 est un cliché d'une coupe métallographique de la pièce de

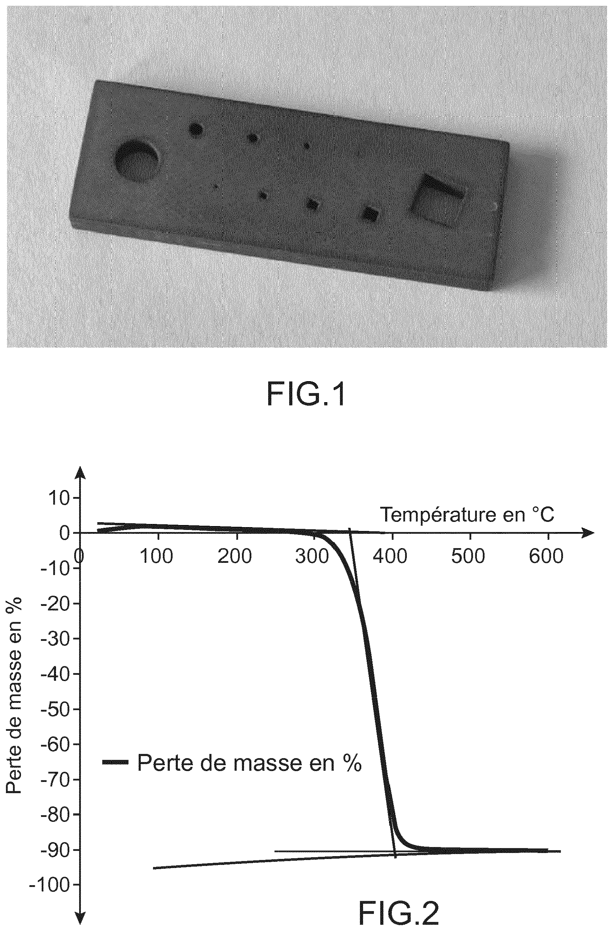

la figure 1, obtenu par microscopie électronique à balayage.

### EXPOSÉ DÉTAILLÉ DE MODES DE RÉALISATION PARTICULIERS

L'invention porte sur un procédé d'élaboration d'un matériau composite à matrice métallique. Le matériau composite est formé d'une matrice métallique renforcée par des carbures métalliques. Dans le procédé de l'invention, le carbone, destiné à former des carbures métalliques, ne provient plus d'une poudre, comme dans l'art antérieur, mais d'un matériau polymère, ce qui facilite la mise en forme de la pièce, diminue les coûts de fabrication et réduit les risques liés à l'utilisation des poudres.

Le procédé comprend au moins les étapes successives suivantes :
a) Fourniture d'une pièce formée d'une poudre métallique dispersée dans un matériau polymère, le matériau polymère comprenant au moins un polymère comprenant une double liaison carbone-carbone et/ou un cycle aromatique,
b) Réalisation d'un premier traitement thermique à une première température T_{d} sur la pièce de manière à dégrader le matériau polymère pour former des résidus carbonés,
c) Réalisation d'un second traitement thermique à une deuxième température T_{f}, supérieure à la première température T_{d}, pour fritter la poudre métallique et, simultanément, diffuser le carbone, provenant des résidus carbonés, dans la poudre métallique de manière à former des précipités de carbure de métal dispersés dans une matrice métallique.

Il a été constaté que, lors de la montée en température pour atteindre la température de frittage, la présence des doubles liaisons et/ou des cycles aromatiques du polymère conduisait, dans un premier temps, à la formation de résidus carbonés, qui réagissaient ensuite avec la poudre métallique pour former des carbure métalliques.

### Mise en forme de la pièce :

La pièce en matériau polymère, fournie à l'étape a), est obtenue par polymérisation d'une pâte comprenant la poudre métallique et un précurseur du polymère. On parle également de liant polymérique ou liant organique ou encore de résine. La pâte est visqueuse, voire éventuellement liquide, et ses constituants sont, avantageusement, répartis d'une manière homogène.

La poudre métallique est, par exemple, une poudre de titane ou une poudre d'un alliage de titane. Par exemple, il peut s'agir d'un alliage alpha/bêta comme Ti-6Al-4V (TA6V), d'un alliage alpha comme TA5E (5% Al et 2% Sn), ou encore d'un alliage bêta comme TV13CA (13% Vanadium, 11% Chrome et 3% d'Aluminium).

La poudre métallique représente au plus 65% volumique de la pâte, et de préférence de 30% à 60% volumique de la pâte, et encore plus préférentiellement de 35% à 58% volumique. Ce pourcentage est aussi appelé taux de charge. De tels taux de charge conduisent à une bonne répartition de la poudre métallique au sein du polymère, et à une quantité suffisante de précipité, répartis de façon homogène au sein de la matrice métallique. Un taux de charge élevé, par exemple de 30% à 65%, conduira à la formation d'un matériau composite présentant une quantité de carbure métallique moins élevée et donc à une dureté moins élevée. En fonction des propriétés mécaniques recherchées, l'homme du métier choisira le taux de charge adapté.

Les particules formant la poudre métallique ont, de préférence, un diamètre inférieur à 50µm, encore plus préférentiellement inférieur à 45µm, et encore plus préférentiellement inférieur à 30µm. Par exemple, les particules ont un diamètre inférieur à 25µlm.

Par précurseur du matériau polymère, on entend des monomères et/ou des oligomères et/ou des pré-polymères menant à la formation du polymère. Dans le cas d'un matériau polymère comprenant plusieurs polymères différents, la pâte comprendra les précurseurs des différents polymères. Avantageusement, chacun des polymères formant le matériau polymère comprendra une ou plusieurs doubles liaisons carbone-carbone et/ou un ou plusieurs cycles aromatiques.

La pâte comprend, en outre, un initiateur de polymérisation tel qu'un amorceur radicalaire ou anionique par exemple.

Préférentiellement, la pièce est mise en forme par stéréolithographie (procédé SLA) par une étape dans laquelle une couche de pâte est formée et dans laquelle le précurseur du polymère est photopolymérisé. Cette étape peut être répétée plusieurs fois jusqu'à obtenir la forme finale de la pièce.

Les pièces formées par SLA peuvent présenter des formes complexes par rapport à celles formées selon les procédés de l'état de la technique. La figure 1 est, par exemple, une pièce rectangulaire présentant des cavités de tailles et formes variées.

A titre illustratif, pour le procédé SLA, peuvent être cités les monomères et oligomères de type époxyde (aussi appelé « époxy »), acrylate, uréthane acrylate, polyéther acrylate, polyéther acrylate à amine modifiée, époxy acrylate ou encore polyesteracrylate. Il peut aussi s'agir, par exemple, de morpholinobutyrophénone, de phénylacétophénone, ou encore de phosphine oxyde.

Avantageusement, on choisira un acrylate, par exemple un polyéther acrylate à amine modifié, un acrylate di-fonctionnel ou hautement fonctionnel. On choisira, par exemple, du Bisphénol A éthoxylate diméthacrylate ou du triméthylolpropane formai acrylate, ou un mélange de ceux-ci.

L'initiation de la polymérisation des acrylates est obtenue par l'absorption de lumière ultraviolette par des substances génératrices de radicaux libres.

Les amorceurs des acrylates sont de type radicalaire et leur choix est guidé principalement par la longueur d'onde de la source lumineuse qu'ils doivent absorber. Leur sélection relève clairement des compétences de l'homme du métier de même que l'ajustement de leur quantité.

Il est rappelé que la gamme UV va d'une longueur d'onde 100nm à 450nm. Les UVC permettent de réticuler en surface des matériaux, les UVB pénètrent dans la couche et les UVA compris entre 315nm et 400nm permettent de réticuler une couche épaisse ayant, par exemple, une épaisseur supérieure à 20 µm et inférieure à 20mm. Dans le cadre de l'invention, la source lumineuse a, avantageusement, une longueur d'onde fixée à 365nm.

Des photoinitiateurs convenant pour les précurseurs de type acrylate sont de la famille des acétophénones ou des alkoxyacétophénones comme le 2,2'-diméthoxy-2-phénylacétophénone (par exemple, l'Irgacure 651 de CIBA) ; de la famille des alkylaminoacétophénones comme la 2-Benzyl-2-(diméthylamino)-4'-morpholinobutyrophénone (par exemple, Irgacure 369 de CIBA) ou la 2-Méthyl-4'-(méthylthio)-2-morpholinopropiophénone (par exemple, Irgacure 907 de CIBA); ou de la famille des hydroxyalkylphénones comme la 2-hydroxy-2-méthyl-1-phényl-propane-1-one (par exemple, Darocure 1173 de CIBA). Il peut également s'agit de dérivé de phosphine-oxyde tel que le Phenylbis(2,4,6-trimethylbenzoyl)phosphine oxide (par exemple, Irgacure 819 de CIBA).

Avantageusement, la pâte est élaborée à température ambiante (20-25°C) et la pièce en matériau composite est mise en forme à température ambiante.

### Traitements thermiques de la pièce :

Lors du premier traitement thermique, appelé aussi étape de déliantage, la dégradation du matériau polymère va conduire à la formation de résidus carbonés. Les résidus carbonés représentent de 2% à 30% massique du matériau polymère. La quantité de résidus est suffisante pour que la poudre métallique réagisse en température avec le carbone pour former des précipités de type carbure.

Contrairement à ce qui se pratique habituellement dans les procédés SLA, où l'on cherche à éliminer la totalité des liants organiques, le choix d'un polymère spécifique avec une double liaison et/ou un cycle aromatique, conduit dans le procédé de l'invention, avantageusement, à la formation de résidus carbonés après l'étape dite de déliantage.

Le traitement thermique appliqué à la pièce formée de particules métalliques dispersées dans le matériau polymère est, avantageusement, réalisé avec de faibles rampes de température (inférieures ou égales à 3°C/min, et de préférence de l'ordre de 1°C/min) pour éviter toute altération de la pièce et l'apparition de fissures. Une telle montée en température est, avantageusement, réalisée sur une plage de 50°C avant la température de déliantage T_{d}. Elle peut également être réalisée sur une plage plus grande, par exemple sur une plage, de 100°C, de 200°C ou encore de la température ambiante (20-25°C) à la température de déliantage. A titre illustratif, si la température de déliantage est de 400°C, une faible montée en température, comme par exemple une montée en température de 1°C/min, sera réalisée de 350°C à 400°C.

Un ou plusieurs paliers en température seront, avantageusement, réalisés avant la température T_{d} de déliantage. Avantageusement, un palier peut être réalisé à T₁=T_{d}-50°C et/ou T₂=T_{d}-100°C. La durée des paliers est d'au moins 30 minutes, de préférence, d'au moins une heure, et encore plus préférentiellement d'au moins deux heures. Les paliers peuvent avoir des durées différentes. Par exemple, pour une température de déliantage de 450°C, un premier palier peut être réalisé à 350°C pendant 30 minutes et un deuxième palier peut être réalisé à 400°C pendant 2h.

Un palier en température est, avantageusement, réalisé à la température T_{f} pendant une durée d'au moins 30 minutes, et de préférence, d'au moins une heure, et encore plus préférentiellement pendant une durée d'au moins deux heures.

Les pièces obtenues présentent des précipités de carbure de métal uniformément dispersés dans la matrice métallique.

Les températures T_{d} de déliantage et T_{f} de frittage seront définies par l'homme du métier en fonction des polymères et des particules métalliques choisies.

L'homme du métier pourra également choisir le nombre de paliers ainsi que la température et la durée des paliers. Ces paramètres peuvent également être déterminés en fonction du taux de charge de l'encre et de la morphologie des poudres. La taille et la quantité de précipités dépendra du traitement thermique.

Par exemple, la température de déliantage T_{d} est comprise dans la gamme allant de 300°C à 600°C, et avantageusement de 400°C à 550°C. La température de frittage T_{f} est comprise dans la gamme allant de 1000°C à 1400°C, et avantageusement de 1200°C à 1300°C.

Les traitements thermiques peuvent être réalisés sous vide, par exemple à une pression inférieure à 1.10⁻⁵mbar ou encore sous argon, à la pression atmosphérique (environ 1bar) ou à une pression partielle de 400 à 800mbar.

Avantageusement, une rampe de température en descente est également réalisée. Par exemple, il s'agit d'une rampe en température inférieure à 5°C/min ou selon une variante d'une rampe en température de 5 à 10°C/min.

Les pièces en MMC, jusque-là, essentiellement limitées au domaine de l'aérospatial, à cause des coûts pourront trouver, grâce au procédé de l'invention, des applications dans de nouveaux domaines d'application, comme l'automobile, les équipements industriels, ou encore les loisirs.

### Exemple illustratif et non limitatif d'un mode de réalisation d'une pièce en TMMC avant une faible teneur en carbure de titane par SLA :

Dans cet exemple, une pièce en matériau composite à matrice de titane est réalisée.

En premier lieu, une pâte est élaborée. Elle comprend de 70% à 90% de Bisphénol A éthoxylate diméthacrylate, de 8% à 28% de Triméthylolpropane Formai Acrylate et de 2% d'un phosphine-oxyde.

Les analyses thermogravimétriques (ATG), réalisées sur cette pâte et sous atmosphère inerte, montrent qu'après dégradation, environ 10% de sa masse reste sous forme de carbone résiduel (figure 2).

De la poudre de titane est ajoutée à la pâte. Les particules de titane ont une forme sphérique et présente une granulométrie inférieure à 25µm. Le taux de charge de la pâte est de 58%.

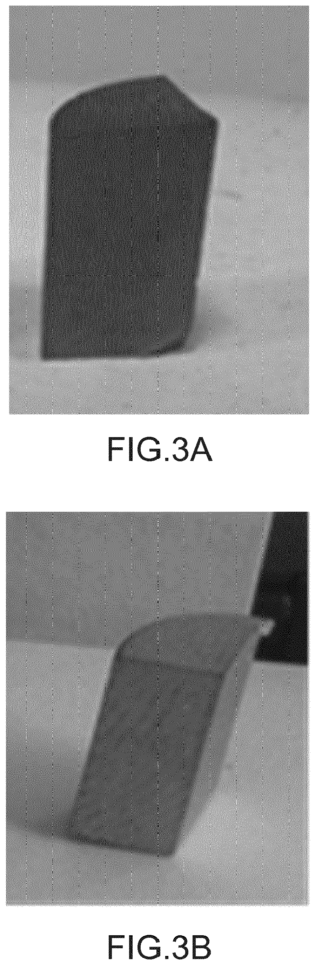

Une pièce a été réalisée par SLA au moyen d'une machine PROWAYs de type K20 V6000. La pièce est formée d'une succession de couche allant de 10µm à 100 µm d'épaisseur. Entre chaque couche, un flash UV permet la réticulation des polymères et donne la tenue mécanique à la pièce. La figure 3A est une photo d'une des pièces réalisées par SLA, avant les traitements thermiques.

Deux traitements thermiques sont réalisés sur la pièce SLA pour former le matériau composite. Le premier traitement thermique est le traitement thermique dit de déliantage. La montée est température est de 1°C/min entre 300°C et 450°C. Deux paliers de 2h ont été réalisés à 350°C et 400°C. A la fin du traitement thermique, les polymères ont été dégradés. Il ne reste plus que du carbone résiduel. Le second traitement thermique comprend un palier de 2h à 1250°C pour former les précipités de carbure et densifier la pièce. La pièce obtenue ne présente pas de défauts visibles à l'oeil nu (figure 3B).

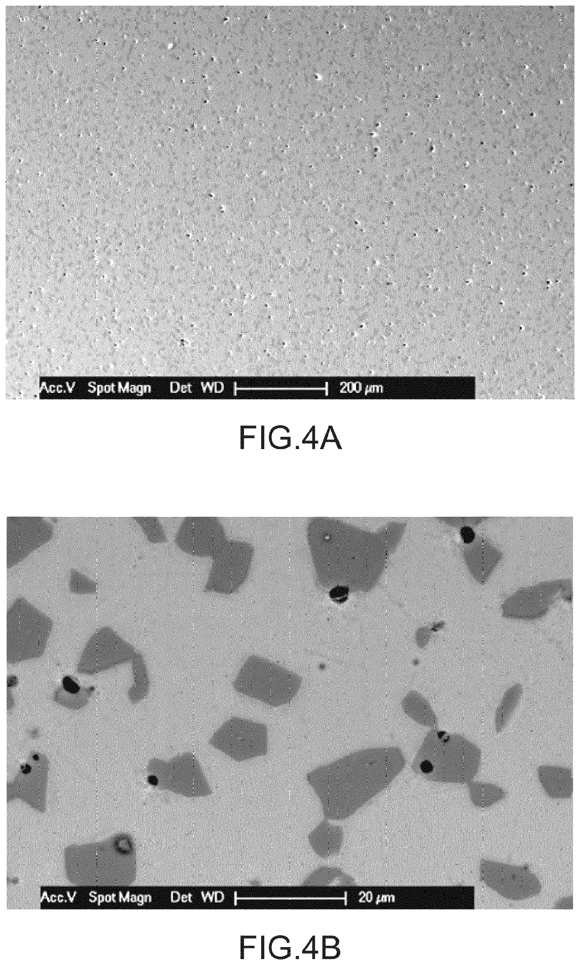

Une coupe métallographique de la pièce a été observée au microscope électronique à balayage (MEB). Les clichés MEB, représentés aux figures 4A et 4B, montrent, au coeur de la matrice titane, une multitude de petits précipités répartis de manière homogène. Les précipités ont des tailles allant de 10µm à 15µm. Les analyses dispersives en énergie (EDX) réalisées sur ces précipités confirment qu'il s'agit bien de carbure de titane.

Des mesures de dureté Vickers ont été faites. Elles montrent que la présence des carbures permet d'améliorer les propriétés de dureté de la matrice titane de près de 60%. La moyenne des duretés mesurées est de 327kg/mm².

Finalement, la masse volumique de l'échantillon fritté a été mesurée, la densité obtenue est supérieure à 98%.

### Exemple illustratif et non limitatif d'un mode de réalisation d'une pièce en TMMC avant une forte teneur en carbure de titane par SLA :

La réalisation d'une pièce à forte teneur en carbure suit le même protocole que précédemment décrit. Le liant est le même, mais, dans cet exemple, le taux de charge de poudre de titane mélangé au liant polymère est de 35% volumique.

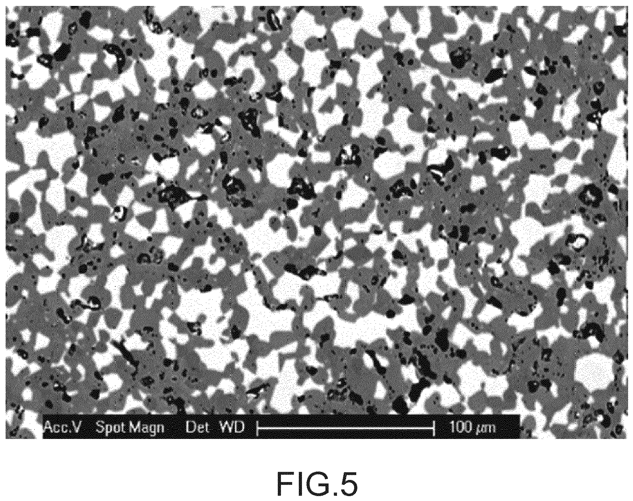

Après déliantage et frittage, la pièce obtenue ne présente pas de défaut macroscopique (figure 1). Une coupe métallographique est réalisée. Le cliché MEB (figure 5) montre une proportion de carbure de titane relativement importante, due à l'augmentation de la quantité de liant dans la pâte.

La moyenne des duretés mesurées est de 442kg/mm².

Les pièces obtenues avec le taux de charge de 35% présentent des propriétés mécaniques plus proche de celles d'une céramique que de celles d'un métal : la dureté est plus élevée et la plasticité plus faible.

## Revendications

1. Procédé d'élaboration d'un matériau composite à matrice métallique comprenant au moins les étapes successives suivantes :
a) Fourniture d'une pièce formée d'une poudre métallique dispersée dans un matériau polymère, le matériau polymère comprenant au moins un polymère comprenant une double liaison carbone-carbone et/ou un cycle aromatique,
b) Réalisation d'un premier traitement thermique à une première température T_{d} sur la pièce de manière à dégrader le matériau polymère pour former des résidus carbonés,
c) Réalisation d'un second traitement thermique à une deuxième température T_{f}, supérieure à la première température T_{d}, pour fritter la poudre métallique et, simultanément, diffuser le carbone, provenant des résidus carbonés, dans la poudre métallique de manière à former des précipités de carbure de métal dispersés dans une matrice métallique.

2. Procédé selon la revendication 1, **caractérisé en ce que** les résidus carbonés représentent 2% à 30% massique du matériau polymère.

3. Procédé selon l'une des revendications 1 et 2, **caractérisé en ce que** les particules formant la poudre métallique ont un diamètre inférieur à 50µm, encore plus préférentiellement inférieur à 45µm, et encore plus préférentiellement inférieur à 30µm.

4. Procédé selon l'une quelconque des revendications précédentes, **caractérisé en ce que** la température T_{d} est comprise dans la gamme allant de 300°C à 600°C, et avantageusement de 400°C à 550°C et **en ce que** la température T_{f} est comprise dans la gamme allant de 1000°C à 1400°C, et avantageusement de 1200°C à 1300°C.

5. Procédé selon l'une quelconque des revendications précédentes, **caractérisé en ce qu'**une rampe en température inférieure ou égale à 3°C/min, et de préférence de l'ordre de 1°C/min, est réalisée de la température T₁= T_{d}-50°C à la température T_{d}.

6. Procédé selon l'une quelconque des revendications précédentes, **caractérisé en ce que** un ou plusieurs paliers en température sont réalisés entre la température Tₚ et T_{d}, avec Tₚ=T₁-150°C, pendant une durée d'au moins 30 minutes, et de préférence, d'au moins une heure, et encore plus préférentiellement pendant une durée d'au moins deux heures.

7. Procédé selon l'une quelconque des revendications précédentes, **caractérisé en ce que** un palier en température est réalisé à la température T_{f} pendant une durée d'au moins 30 minutes, et de préférence, d'au moins une heure, et encore plus préférentiellement pendant une durée d'au moins deux heures.

8. Procédé selon l'une quelconque des revendications précédentes, **caractérisé en ce que** les précipités de carbure de métal sont uniformément dispersés dans la matrice métallique.

9. Procédé selon l'une quelconque des revendications précédentes, **caractérisé en ce que** la matrice métallique est en titane ou en alliage de titane.

10. Procédé selon l'une quelconque des revendications précédentes, **caractérisé en ce que** la pièce en matériau composite, fournie à l'étape a), est formée à température ambiante.

11. Procédé selon l'une quelconque des revendications précédentes, **caractérisé en ce que** la pièce de l'étape a) est obtenue par polymérisation d'une pâte comprenant la poudre métallique et un précurseur du polymère.

12. Procédé selon la revendication précédente, **caractérisé en ce que** la poudre métallique représente au plus 65% volumique de la pâte, et de préférence de 30% à 60% volumique de la pâte, et encore plus préférentiellement de 35% à 58% volumique.

13. Procédé selon l'une des revendications 11 et 12, **caractérisé en ce que** le polymère est photopolymérisable et **en ce que** la pâte comprend un photoinitiateur de polymérisation.

14. Procédé selon l'une des revendications 11 à 13, **caractérisé en ce que** le polymère est de type acrylate, époxyde ou un de leurs mélanges.

15. Procédé selon l'une des revendications 11 et 14, **caractérisé en ce que**, avant l'étape a), la pièce est mise en forme par stéréolithographie selon une étape a1) dans laquelle :
- une couche de pâte, contenant la poudre métallique, le précurseur du polymère et le photoinitiateur, est formée, et
- le précurseur du polymère est photopolymérisé,
l'étape a1) pouvant être répétée plusieurs fois.

16. Procédé selon l'une quelconque des revendications précédentes, **caractérisé en ce que** le matériau polymère comprend différents polymères, chacun muni d'une double liaison carbone-carbone et/ou d'un cycle aromatique.
